Europäisches Patentamt
European Patent Office
Office européen des brevets

(11) Veröffentlichungsnummer: **0 448 148 A2**

(12) **EUROPÄISCHE PATENTANMELDUNG**

(21) Anmeldenummer: **91200500.6**

(51) Int. Cl.[5]: **C08G 75/04**

(22) Anmeldetag: **08.03.91**

(30) Priorität: **23.03.90 DE 4009329**

(43) Veröffentlichungstag der Anmeldung: **25.09.91 Patentblatt 91/39**

(84) Benannte Vertragsstaaten: **AT BE CH DE DK ES FR GB GR IT LI LU NL SE**

(71) Anmelder: **METALLGESELLSCHAFT Aktiengesellschaft**
**Reuterweg 14**
**W-6000 Frankfurt am Main(DE)**

(72) Erfinder: **Nuyken, Oskar, Prof. Dr.**
**Ignaz-Günther-Strasse 12**
**W-8000 München 81(DE)**
Erfinder: **Pollok, Thomas, Dr.**
**Aschaffenburger Strasse 36**
**W-6082 Mörfelden-Walldorf(DE)**
Erfinder: **Völkel, Thomas**
**Bismarckstrasse 49**
**W-8580 Bayreuth(DE)**
Erfinder: **Winterstein, Wolfgang, Dr.**
**Eichendorffstrasse 35**
**W-6367 Karben 6(DE)**

(54) **Polymerer Stoff hoher Wärmebeständigkeit und Verfahren zu seiner Herstellung.**

(57) Es wird ein polymerer Stoff beschrieben, der durch Polymerisation aus Bicyclo[2,2,1]hepta-2,5-dien (2,5-Norbornadien) und einer Dimercaptoverbindung der allgemeinen Formel

HS-R-SH,

hergestellt wird, worin R ein aus 6 - 20 Kohlenstoffatomen bestehender, ein- oder mehrkerniger, aromatischer oder ein aus 4 - 10 Kohlenstoffatomen bestehender cycloaliphatischer Rest ist, der ein Molekulargewicht von 300 bis 250000 aufweist und der die Zusammensetzung

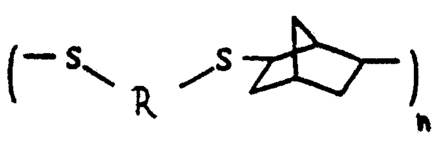

n = 3 bis 1000
hat.

EP 0 448 148 A2

Die Erfindung betrifft einen polymeren Stoff sowie ein Verfahren zu seiner Herstellung.

Unter den technischen Kunststoffen für extreme Beanspruchung wird das bereits seit 1948 bekannte Polyphenylensulfid (PPS) wegen seiner guten mechanischen und thermischen Eigenschaften als thermoplastischer Kunststoff geschätzt. Die Beherrschung der bei der Herstellung von PPS durch Polykondensation von Para-Dichlorbenzol und Natriumsulfid freiwerdenden Reaktionswärme und damit die großtechnische Produktion von PPS gelang aber erst Jahre später (1967). Polyphenylensulfid wird heute in einem zweistufigen Prozeß hergestellt, bei dem in der ersten Stufe Natriumsulfid und Para-Dichlorbenzol in N-Methylpyrrolidon bei Temperaturen von 200 bis 240 °C gemäß der allgemeinen Gleichung

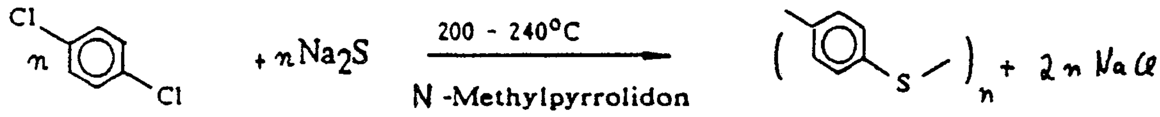


umgesetzt werden. Das hierbei anfallende Rohpolyphenylensulfid ist jedoch noch nicht ausreichend hochmolekular, um thermoplastisch verarbeitet werden zu können und dient daher lediglich zur Herstellung von Beschichtungsdispersionen. In einer zweiten Polymerisationsstufe wird daher das Roh-PPS vorsichtig und unter kontrollierter Sauerstoffzufuhr auf eine Temperatur knapp unterhalb seines Schmelzpunktes erhitzt. Erst nach diesem zweiten Polymerisationsschritt besitzt PPS seine guten Endeigenschaften und kann durch z.B. Spritzgießen verarbeitet werden. Als charakteristische Eigenschaften des Polyphenylensulfids gelten hohe Festigkeit, Steifheit und Härte, ferner hohe Gebrauchstemperatur von ca. 200 bis 260 °C und kurzzeitig bis 300 °C, gute Chemikalien-, Hydrolyse- und Oxidationsbeständigkeit, geringe Wasseraufnahme, gute Verarbeitbarkeit, hohe Maßhaltigkeit und gutes Brandverhalten (schlechte Entflammbarkeit).

Es ist ferner bekannt, die Gebrauchstemperatur des PPS durch Zusatz von Wärmestabilisatoren, also Polymeren mit radikalstabilisierenden Gruppen wie z.B. Polyetherketon, Polyvinylcarbazol, Polybutylenterephthalat und Polyamid zu erhöhen, ("Kunststoffe" 79 (1989), S. 52-54).

Es sind schließlich Reaktionsprodukte bekannt, die bei der Umsetzung von Diethyldithiophosphorsäure mit Monomeren gebildet werden, die konjugierte oder isolierte Doppelbindungen enthalten, wie z.B. Butadien oder 2,5-Norbornadien. Die Umsetzung des 2,5-Norbornadien mit Diethyldithiophosphorsäure in Heptan führt unter exothermer Reaktion zu einem kristallinen Reaktionsprodukt mit einem Schmelzpunkt von etwa 97 bis 99 °C. ("J.ORG.CHEM." Vol. 28, 1963, S. 1262-1268).

Der Erfindung liegt die Aufgabe zugrunde, einen neuen polymeren Stoff mit guten mechanischen Eigenschaften und hoher Wärmebeständigkeit bereitzustellen, der aufgrund seiner monomeren Bausteine zu einer starren Gerüststruktur führt und der ferner unter gut beherrschbaren und einfachen Herstellungsbedingungen in einem einzigen Prozeßschritt hergestellt werden kann. Der Erfindung liegt also auch die Aufgabe zugrunde, ein Verfahren zur Herstellung des polymeren Stoffes zu schaffen.

Die der Erfindung zugrundeliegende Aufgabe wird durch die Schaffung eines polymeren Stoffes gelöst, der durch Polymerisation aus Bicyclo[2,2,1]hepta-2,5-dien (2,5-Norbornadien) und einer Dimercaptoverbindung der allgemeinen Formel HS-R-SH hergestellt wird, wobei R ein aus 6 - 20 Kohlenstoffatomen bestehender ein- oder mehrkerniger, aromatischer oder ein aus 4 - 10 Kohlenstoffatomen bestehender cycloaliphatischer Rest ist, der ein Molekulargewicht von 300 bis 250000 aufweist und folgende Zusammensetzung hat:

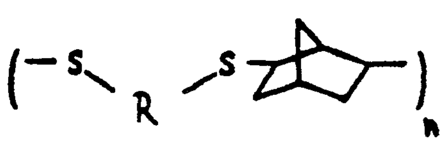

n = 3 bis 1000

In der nachstehenden Formel ist das Polymerisat aus 1,3-Dimercaptobenzol und 2,5-Norbornadien dargestellt:

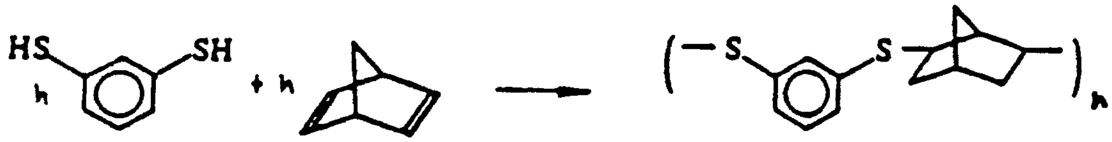

Nach der Erfindung ist vorgesehen, daß der aromatische Rest R in der allgemeinen Formel HS-R-SH aus Verbindungen der Gruppen Phenyl, Diphenyl, Diphenylmethan, Diphenylsulfid, Diphenylsulfon, Diphenyläther, Diphenylamin, 2,2-Diphenylpropan, Naphthalin und Anthracen besteht. Von den Verbindungen mit der Formel HS-R-SH eignen sich insbesondere einkernige Dimercaptoverbindungen wie 1,2-Dimercaptobenzol, 1,3-Dimercaptobenzol oder 1,4-Dimercaptobenzol oder mehrkernige Dimercaptoverbindungen wie 4,4'-Dimercaptodiphenyl, 4,4'-Dimercaptodiphenylsulfid, 4,4'-Dimercaptodiphenylsulfon zur Herstellung des erfindungsgemäßen polymeren Stoffes.

Nach der Erfindung ist ferner vorgesehen, daß in der allgemeinen Formel HS-R-SH der cycloaliphatische Rest R aus einem Cyclopentyl-, Cyclohexyl-, Cycloheptyl- oder Cyclooctylrest besteht. Cycloalkyldimercaptoverbindungen werden insbesondere dann eingesetzt, wenn eine Steigerung der Lichtstabilität erzielt werden soll. Es ist auch möglich, einen heterocyclischen Rest R, z.B. den Pyridyl- oder Furylrest, zu verwenden.

Nach der Erfindung ist weiterhin vorgesehen, daß der polymere Stoff ein hochmolekulares Polymerisat mit großer Wärmebeständigkeit und einem Molekulargewicht von 5000 bis 250000 ist. Wenn nämlich die beiden Ausgangskomponenten des neuen erfindungsgemäßen Polymers, Dimercaptoverbindung und 2,5-Norbornadien, in stöchiometrischen Anteilen zur Reaktion gebracht werden, bilden sich hochmolekulare Polymere mit einem Molekulargewicht zwischen 5000 und 250000. Diese Produkte sind kristalline, weiße bis gelbliche Pulver, deren Zersetzungsbereich oberhalb von 380 °C beginnt. Durch geeignete Auswahl der Dimercaptoverbindung lassen sich aber auch Produkte mit Zersetzungstemperaturen über 400 °C gewinnen, beispielsweise durch die Verwendung von Dimercaptocycloalkylen mit 8 - 10 Kohlenstoffatomen oder Dimercaptodiphenylsulfon. Generell sind die erfindungsgemäßen Polymere mit Molgewichten ≧ 5000 feste kristalline Produkte, die einen Schmelzbereich oberhalb 50 °C aufweisen.

Schließlich ist nach der Erfindung vorgesehen, daß der polymere Stoff ein niedermolekulares, mit Mercaptogruppen oder isolierten Doppelbindungen terminiertes Polymerisat mit einem Molekulargewicht von 300 bis 5000 ist. Werden nämlich die beiden Ausgangskomponenten des Polymers in nicht-stöchiometrischen Anteilen zur Reaktion gebracht, so entstehen Oligomere mit einem Molekulargewicht von 300 bis 5000, deren definierte reaktive Endgruppen für weitere Synthesen ausgenutzt werden können, beispielsweise zur Blockcopolymerisation, Vernetzung und Vervielfältigung des Molekulargewichts durch Oxidation zum Disulfid. Je nachdem, welche der Ausgangskomponenten im stöchiometrischen Überschuß vorliegt, entstehen Oligomere, die entweder mit Mercaptogruppen oder mit isolierten Doppelbindungen terminiert sind, das heißt im letzteren Fall ist die Endgruppe die Norbornen-Gruppe.

Die der Erfindung zugrundeliegende Aufgabe wird ferner durch die Schaffung eines Verfahrens zur Herstellung des polymeren Stoffes gelöst, bei dem die beiden Ausgangskomponenten HS-R-SH und 2,5-Norbornadien in Substanz oder in einem organischen Lösungsmittel, das für Radikalreaktionen geeignet ist, gegebenenfalls unter Einsatz radikalbildender Mittel polymerisiert werden.

Zur Herstellung des Polymers gemäß der Erfindung werden die beiden Ausgangskomponenten direkt in Substanz oder in einem organischen Lösungsmittel, wie Toluol, Xylol, Nitrobenzol, Tetrahydrofuran oder Dioxan, umgesetzt. Je nach Reaktivität kann die Reaktion durch Einsatz radikalbildender Mittel initiiert bzw. beschleunigt werden. Insbesondere bei der Umsetzung der Ausgangskomponenten in einem Lösungsmittel ist die Initiierung zweckmäßig. Dabei kann die Radikalbildung im einfachsten Fall durch Wärmezufuhr oder auch durch Einwirkung von Mikrowellen erfolgen, ferner durch UV-Bestrahlung, weiterhin durch Zugabe von Radikalinitiatoren wie Azoverbindungen oder Peroxiden. Die Reaktionstemperatur beträgt in aller Regel 50 bis 100 °C und liegt vorzugsweise bei 60 bis 80 °C. Zweckmäßig wird die Umsetzung unter Schutzgasatmosphäre und unter stetem Rühren des Reaktionsmediums ausgeführt. Nach erfolgter Umsetzung wird, sofern ein Lösungsmittel verwendet wurde, dieses durch Destillation abgetrennt. Danach wird das Reaktionsprodukt durch Einbringen in gekühlten Alkohol, z.B. Methanol, ausgefällt. Die Reinheit der Produkte kann in an sich bekannter Weise durch mehrfaches Umfällen verbessert werden. Die Produkte sind je nach Polymerisationsgrad kristalline oder klebrige, mehr oder weniger zähe Substanzen.

In weiterer Ausgestaltung der Erfindung ist vorgesehen, daß zur Herstellung von mit Mercaptogruppen terminierten Polymerisaten die Dimercaptoverbindung im stöchiometrischen Überschuß verwendet wird, und daß zur Herstellung von mit isolierten Doppelbindungen terminierten Polymerisaten 2,5-Norbornadien im

stöchiometrischen Überschuß verwendet wird. In beiden Fällen liegt das stöchiometrische Verhältnis zwischen 1:1,05 und 1:2, und es resultieren Polymere mit einem Moleku- largewicht von 300 bis 5000.

Wie vorstehend erläutert, sind die gemäß der Erfindung terminierten Oligomere aufgrund der reaktiven Endgruppen als Bausteine für weitere Polymersynthesen einsetzbar. Nach der Erfindung wird daher ein reaktiver, Mercaptoendgruppen aufweisender polymerer Stoff mit einer Verbindung der allgemeinen Formel

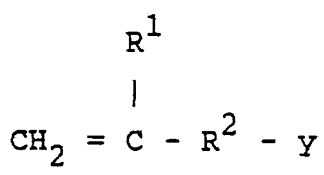

oder

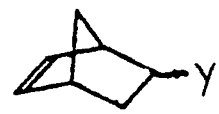

umgesetzt, worin

$R^1$ = Wasserstoff oder Methyl

$R^2$ = ein linearer oder verzweigter Alkylrest mit 1-12 C-Atomen oder ein Cycloalkylrest mit 4-10 C-Atomen oder ein ein- oder mehrkerniger Arylrest oder
- CO-$OR^3$ oder
- CO-NH-$R^3$ oder
- $SO_2$-$R^3$ ($R^3$ = Alkyl, Cycloalkyl, Aryl)

und

Y = -Cl, -Br, -I, -OH, -$NH_2$, -NCO,-$SO_3H$, - $PO_3H_2$, -COOH, -COCl, -$COOR^4$ mit $R^4$ = Alkyl

ist.

Diese Reaktion wird unter Schutzgas bei etwa 50 bis 70 °C z.B. in Toluol oder Dioxan durchgeführt. Beispielsweise können mercaptoterminierte Oligomere durch Umsetzung mit 3-Aminostyrol unter SH-Addition in Verbindungen mit Aminoendgruppen übergeführt werden. Ein solches reaktives Aminopräpolymer kann z.B. als Baustein für Polyamide oder Polyurethane dienen.

Zur Herstellung weiterer endgruppenmodifizierter polymerer Stoffe wird nach der Erfindung ein endständige, reaktive Doppelbindungen aufweisender polymerer Stoff mit einer Verbindung der allgemeinen Formel HS-$R^5$-Z umgesetzt, worin

$R^5$ = ein linearer oder verzweigter Alkylrest mit 1-12 C-Atomen oder ein Cycloalkylrest mit 4-10 C-Atomen oder ein ein- oder mehrkerniger Arylrest und

Z = -OH, -$NH_2$, -COOH,-$CONH_2$,-$CONHNH_2$, -$COOR^6$ mit $R^6$ = Alkyl

ist.

Andererseits können Oligomere, die mit isolierten Doppelbindungen terminiert sind, auch als Comonomere, als Vernetzer oder in Verbindung mit Styrol, Acrylaten, Methacrylaten oder N-Vinylpyrrolidon eingesetzt werden. Derartige Produkte eignen sich als lichtempfindliche, filmbildende Materialien (Photolacke).

Die Vorteile der erfindungsgemäßen polymeren Stoffe sind darin zu sehen, daß einerseits hochwärmebeständige thermoplastische Polymere in einem weiten Molekulargewichtsbereich nach einem ebenso einfachen wie wirtschaftlichen Verfahren ohne aufwendige Apparaturen hergestellt werden können. Die thermoplastischen Polymere können nach üblichen Verarbeitungstechniken, z. B. durch Spritzguß oder Extrusion, verarbeitet werden. Andererseits können auch mit reaktiven Gruppen terminierte niedermolekulare Oligomere hergestellt werden, die als Präpolymere für die Herstellung weiterer hochmolekularer Polymere eingesetzt werden können.

Der Gegenstand der Erfindung wird anhand der nachstehenden Beispiele näher erläutert.

Beispiel 1

Eine Lösung von 14,2 g 1,3-Dimercaptobenzol in 250 ml Toluol wird mit 9,2 g 2,5-Norbornadien versetzt. Nach Zugabe von 19 mg Azoisobutyronitril (AIBN) wird das Gemisch unter Schutzgas (Ar) 20 h bei 70 °C gerührt. Bei dem anschließenden Eintropfen der Reaktionslösung in gekühltes Methanol setzt sich das Polymer ab. Zur Reinigung wird das Polymer noch zweimal in Toluol gelöst und in Methanol gefällt. Nach Trocknen im Vakuum erhält man 20,5 g weißes, kristallines Polymer mit einem Molgewicht von ca. 6000.

Beispiel 2

14,2 g 1,3-Dimercaptobenzol und 7,7 g 2,5-Norbornadien - gelöst in 250 ml Toluol - werden mit 19 mg AIBN versetzt und 20 h bei 70° C unter Schutzgas (Ar) gerührt. Das Lösungsmittel wird anschließend abdestilliert, und das verbleibende flüssige Polymer wird mit Methanol gewaschen. Man erhält ein hellgelbes, flüssiges Polymer mit Mercapto-Endgruppen und einem Molgewicht von ca. 1300.

Beispiel 3

11,8 g 1,3-Dimercaptobenzol und 9,2 g 2,5-Norbornadien werden gemäß der Arbeitsweise des Beispiels 2 umgesetzt. Das Produkt ist ein flüssiges Polymer mit 2,5-Norbornen-Endgruppen und einem Molgewicht von ca. 1250.

Beispiel 4

5,0 g eines Polymers aus 1,3-Dimercaptobenzol und 2,5-Norbornadien mit Mercapto-Endgruppen und einem Molgewicht von 1700 werden in 500 ml Toluol gelöst. Nach Zugabe von 0,7 g 3-Aminostyrol und 0,01 g AIBN wird das Reaktionsgemisch unter Schutzgas (Ar) 16 h bei 60° C gerührt. Das gebildete Polymer wird durch Eintragen in Methanol ausgefällt. Nach zweimaligem Umfällen und Trocknen erhält man 5,0 g eines aminoterminierten Polymers mit einer Glasübergangstemperatur von 60° C und einem Molekulargewicht von 1900.

Beispiel 5

Eine Lösung des nach Beispiel 4 hergestellten aminoterminierten Polymers - gelöst in 500 ml Tetrahydrofuran (THF) - wird mit 0,6 g Triethylamin versetzt. Anschließend werden 1,2 g Terephthalsäurechlorid in 100 ml THF zugetropft und 16 h bei 50° C gerührt. Nach Ausfällen mit Methanol, zweimaligem Umfällen aus THF und Trocknen erhält man 4,0 g Polyamid mit einem Molekulargewicht von ca. 8000.

Beispiel 6

Zu 23 g 4,4'-Dimercaptodiphenylether und 9,2 g 2,5-Norbornadien, gelöst in 250 ml Toluol, werden 40 mg AIBN zugegeben. Nach 48 h Rühren bei 70° C unter Schutzgas (Ar) wird die Toluollösung in 600 ml Methanol getropft. Es fällt ein gelblich-weißer Niederschlag aus, der noch zweimal aus Toluol umgefällt wird. Nach dem Trocknen im Hochvakuum werden 2,3 g (ca. 70 %) Polymer erhalten, das ein Molekulargewicht von 3000 und eine Glasübergangstemperatur von 28° C aufweist. Die Polyaddition von 4,4-Dimercaptodiphenylether an 2,5-Norbornadien ist in der nachstehenden Formel veranschaulicht:

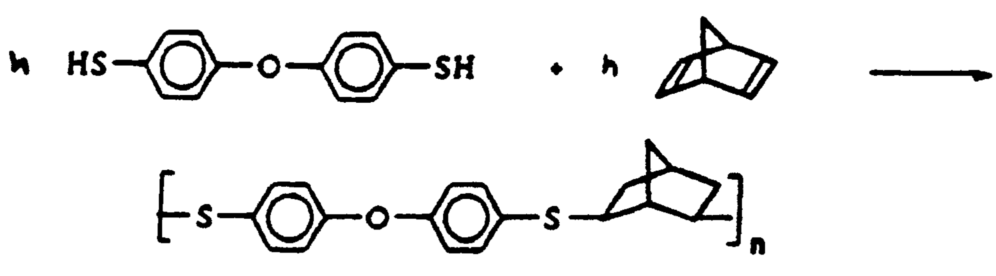

**Patentansprüche**

1. Polymerer Stoff, dadurch gekennzeichnet, daß er durch Polymerisation aus Bicyclo-2,2,1-hepta-2,5-dien (2,5-Norbornadien) und einer Dimercaptoverbindung der allgemeinen Formel

   HS-R-SH

   hergestellt wird, wobei R ein aus 6 - 20 Kohlenstoffatomen bestehender, ein- oder mehrkerniger, aromatischer oder ein aus 4 - 10 Kohlenstoffatomen bestehender, cycloaliphatischer Rest ist, daß er ein Molekulargewicht von 300 bis 250000 aufweist, und daß er die Zusammensetzung

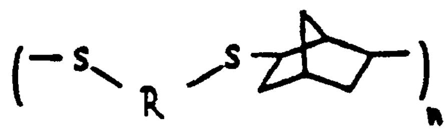

n = 3 bis 1000
hat.

2. Polymerer Stoff nach Anspruch 1, dadurch gekennzeichnet, daß der aromatische Rest R aus Verbindungen der Gruppen

Phenyl
Diphenyl
Diphenylmethan
Diphenylsulfid
Diphenylsulfon
Diphenyläther
Diphenylamin
2,2-Diphenylpropan
Naphthalin und
Anthracen

besteht.

3. Polymerer Stoff nach Anspruch 1, dadurch gekennzeichnet, daß der cycloaliphatische Rest R aus einem Cyclopentyl-, Cyclohexyl-, Cycloheptyl- oder Cyclooctylrest besteht.

4. Polymerer Stoff nach den Ansprüchen 1 bis 3, dadurch gekennzeichnet, daß er ein hochmolekulares Polymerisat mit großer Wärmebeständigkeit und einem Molekulargewicht von 5000 bis 250000 ist.

5. Polymerer Stoff nach den Ansprüchen 1 bis 3, dadurch gekennzeichnet, daß er ein niedermolekulares, mit Mercaptogruppen oder isolierten Doppelbindungen terminiertes Polymerisat mit einem Molekulargewicht von 300 bis 5000 ist.

6. Verfahren zur Herstellung des polymeren Stoffes gemäß den Ansprüchen 1 bis 5, dadurch gekennzeichnet, daß die beiden Ausgangskomponenten HS-R-SH und 2,5-Norbornadien in Substanz oder in einem organischen Lösungsmittel, das für Radikalreaktionen geeignet ist, gegebenenfalls unter Einsatz radikalbildender Mittel polymerisiert werden.

7. Verfahren nach Anspruch 6 zur Herstellung eines polymeren Stoffes gemäß Anspruch 5, dadurch gekennzeichnet, daß zur Herstellung von mit Mercaptogruppen terminierten Polymerisaten die Dimercaptoverbindung im stöchiometrischen Überschuß verwendet wird.

8. Verfahren nach Anspruch 6 zur Herstellung eines polymeren Stoffes gemäß Anspruch 5, dadurch gekennzeichnet, daß zur Herstellung von mit isolierten Doppelbindungen terminierten Polymerisaten 2,5-Norbornadien im stöchiometrischen Überschuß verwendet wird.

9. Verfahren zur Herstellung eines endgruppenmodifizierten polymeren Stoffes, dadurch gekennzeichnet, daß ein gemäß Anspruch 7 hergestellter, reaktive Mercaptoendgruppen aufweisender polymerer Stoff mit einer Verbindung der allgemeinen Formel

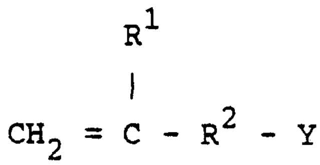 oder 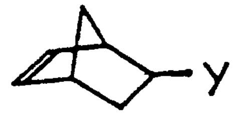

umgesetzt wird, worin

$R^1$ = Wasserstoff oder Methyl

$R^2$ = ein linearer oder verzweigter Alkylrest mit 1-12 C-Atomen oder
ein Cycloalkylrest mit 4-10 C-Atomen oder ein ein- oder mehrkerniger Arylrest oder
- CO-$OR^3$ oder
- CO-NH-$R^3$ oder
- $SO_2$-$R^3$ ($R^3$ = Alkyl, Cycloalkyl, Aryl)

und

Y = -Cl, -Br, -I, -OH, $NH_2$, -NCO,-$SO_3H$, - $PO_3H_2$, -COOH, -COCl, -$COOR^4$ mit $R^4$ = Alkyl

ist.

**10.** Verfahren zur Herstellung eines endgruppenmodifizierten polymeren Stoffes, dadurch gekennzeichnet, daß ein gemäß Anspruch 8 hergestellter, endständige reaktive Doppelbindungen aufweisender polymerer Stoff mit einer Verbindung der allgemeinen Formel HS-$R^5$-Z umgesetzt wird, worin

$R^5$ = ein linearer oder verzweigter Alkylrest mit 1-12 C-Atomen oder ein Cycloalkylrest mit 4-10 C-Atomen oder ein ein- oder mehrkerniger Arylrest und

Z = -OH, -$NH_2$, -COOH,-$CONH_2$,-$CONHNH_2$, -$COOR^6$ mit $R^6$ = Alkyl

ist.